# EUROPÄISCHE PATENTSCHRIFT

(11) **EP 3 211 215 B1**
(45) Veröffentlichungstag und Bekanntmachung des Hinweises auf die Patenterteilung: **01.05.2019**
(21) Anmeldenummer: 17156195.4
(22) Anmeldetag: 15.02.2017
(51) Int. Cl.: F03B 3/12

(54) **LAUFRADSCHAUFEL EINER HYDRAULISCHEN STRÖMUNGSMASCHINE MIT ANTIKAVITATIONSLEISTE UND ANTIKAVITATIONSLEISTE FÜR EINE LAUFRADSCHAUFEL**
IMPELLER BLADE OF A HYDRAULIC TURBOMACHINE WITH ANTI-CAVITATION STRIP AND ANTI-CAVITATION STRIP FOR AN IMPELLER BLADE
AUBE DE ROTOR D'UNE TURBOMACHINE HYDRAULIQUE COMPRENANT UNE BARRE ANTI-CAVITATION ET BARRE ANTI-CAVITATION POUR UNE AUBE DE ROTOR

(30) Priorität: 26.02.2016 AT 501432016
(43) Veröffentlichungstag der Anmeldung: 30.08.2017
(73) Patentinhaber: Andritz Hydro GmbH, 1120 Wien (AT)
(72) Erfinder: WEISSER, Marco, 7522 La Punt-Chamues (CH); KELLER, Markus, 8716 Schmerikon (CH); WALLIMANN, Henrik, 8008 Thalwil (CH); FISCHER, Pascal, 6018 Buttisholz (CH); SALLABERGER, Manfred, 8049 Zürich (CH)
(74) Vertreter: Schweinzer, Friedrich

(56) Entgegenhaltungen:
- EP-A1- 2 987 956
- WO-A1-2014/202485
- JP-A- 2005 315 216
- JP-U- S6 254 280

## Beschreibung

Die Erfindung betrifft eine Laufradschaufel einer hydraulischen Strömungsmaschine, insbesondere Turbine, Pumpe oder Pumpturbine bestehend aus einer Nabe und Laufradschaufeln ohne Aussenkranz, wobei die Laufradschaufeln drehbar oder fest an der Nabe befestigt sind und am Aussendurchmesser eine Antikavitationsleiste aufweisen.

Hydraulische Strömungsmaschinen weisen im Allgemeinen ein Laufrad auf, das mit einer Anzahl von Schaufeln ausgestattet ist, die der Energieübertragung dienen. Diese Laufradschaufeln können mit der Nabe fest oder drehbar verbunden sein und können mit oder ohne Aussenkranz gebaut werden. Bei Laufrädern ohne Aussenkranz kann am Aussendurchmesser eine Leiste oder Lippe angebracht werden.

Mit Hilfe von einstellbaren Leitschaufeln wird der Durchfluss des Wassers und damit die Leistung reguliert oder der Durchfluss ganz abgeschlossen. Die Durchströmrichtung kann radial, axial oder diagonal sein. Die Laufradschaufeln können über einen Zapfen mit der Nabe drehbar verbunden sein und eine einstellbare Stellung aufweisen. Damit lässt sich die Turbine an unterschiedliche Belastungszustände derart anpassen, dass immer ein optimaler Wirkungsgrad erreicht wird. Der häufigste Typ einer Turbine mit verstellbaren Laufradschaufeln ist eine Kaplanturbine bei der die Zapfen der Laufradschaufeln senkrecht zur Welle angebracht sind.

Daraus ergibt sich, dass es für jeden Betriebspunkt der Turbinenanlage eine optimale Öffnung der Leitschaufeln und eine optimale Stellung der Laufradschaufeln gibt, um die erzeugte Energie bei der vorhandenen Wassermenge zu maximieren. Zwischen der Laufradschaufel und dem umgebenden Laufradmantel gibt es einen Spalt, der zu Wasserverlust führt. Bei der Durchströmung dieses Spaltes kommt es zudem zu Wirbelbildung. In den Wirbeln kann Dampfdruck und damit Kavitation entstehen und an Oberflächen zu Kavitationsschäden führen. Um das Kavitationsverhalten zu verbessern wurden viele verschiedene Formen von Laufradschaufeln entworfen, so z.B. in der US 5,226,804 eine Laufradschaufel mit einer vergrößerten Fläche an der Einlaufkante. Auch gibt es die Möglichkeit der Anbringung einer Leiste am Aussendurchmesser der Laufradschaufel, auch Kavitationsleiste oder Antikavitationsleiste genannt, um die Durchströmung des Spaltes und damit die Wirbelbildung und Kavitationsschäden zu verringern. Weiters zeigt die EP 2 987 956 einen Kompressorflügel, der an seiner Spitze ein Winglet aufweist. Die WO 2014/202485 beschreibt eine hydraulische Turbine bei der an der Aussenkante der Laufradschaufel eine Verschleißleiste angebracht ist.

Bekannte Antikavitationsleisten können das Problem aber nicht völlig lösen. Somit hat es sich die Erfindung zur Aufgabe gemacht eine Laufradschaufel einer hydraulischen Strömungsmaschine mit einer Antikavitationsleiste zu schaffen, die den Kavitationsschaden wesentlich verringert.

Die Erfindung ist daher dadurch gekennzeichnet, dass die Antikavitationsleiste mehrere Bereiche mit unterschiedlicher Höhe aufweist, wobei die Antikavitationsleiste nach einem Anlaufbereich im Anschluss an die sehr flache Eintrittskante der Antikavitationsleiste einen Bereich mit größerer Höhe von 120 - 250 %, vorzugsweise 130 - 220 %, der Höhe der übrigen Antikavitationsleiste und im anschließenden Bereich eine Höhe von 100 % aufweist, wobei die Laufradschaufel als Profil mit veränderlicher Dickenverteilung ausgeführt sein kann. Unter einer Höhe von 100 % wird die Höhe einer Leiste ohne Überhöhung verstanden. Durch die größere Höhe der Leiste am Beginn kann der kavitierende Wirbel von der Laufradschaufel und der Leiste weg in den freien Raum verlagert werden, wodurch die Kavitationsschäden stark verringert werden. Durch das Schaufelprofil mit veränderlicher Dicke wird die Strömung bestmöglich geführt.

Eine vorteilhafte Ausgestaltung der Erfindung ist dadurch gekennzeichnet, dass die Länge des Bereichs mit größerer Höhe 10 - 45 %, vorzugsweise 20 - 25 %, der Gesamtlänge der Antikavitationsleiste beträgt. Damit können die Wirbel besonders gut von der Antikavitationsleiste weg verlagert werden.

Eine günstige Weiterbildung der Erfindung ist dadurch gekennzeichnet, dass die Antikavitationsleiste bis zu ihrem Ende eine konstante geringere Höhe von 100 % aufweist.

Eine günstige Ausgestaltung der Erfindung ist dadurch gekennzeichnet, dass weitere Bereiche mit größerer Höhe von über 120 % über die Länge der Antikavitationsleiste vorgesehen sind, die voneinander durch Bereiche geringerer Höhe von 100 % getrennt sind. Damit kann der Effekt der Verlagerung der Wirbel wiederholt und somit die Kavitationsschäden noch weiter verringert werden.

Eine vorteilhafte Ausgestaltung der Erfindung ist dadurch gekennzeichnet, dass die Antikavitationsleiste mit der Laufradschaufel integriert, angeschweißt oder angeschraubt ist.

Eine vorteilhafte Weiterbildung der Erfindung ist dadurch gekennzeichnet, dass an den ersten Bereich mit größerer Höhe anschließend eine Anzahl von Einsätzen aus kavitationsresistentem Material in der Antikavitationsleiste angeordnet ist, wobei die Einsätze an der Laufradschaufel angeschweißt oder angeschraubt werden können. Durch diese Einsätze wird die Lebensdauer der Laufradschaufel und der Antikavitationsleiste stark verlängert. Derartige Einsätze können z.B. aus rostbeständigem Stahl, z.B. X 5 CrNi 13.4, oder besonders kavitationsresistenten Metallen (zum Beispiel kaltverfestigungsfähige rostfreie austenitische Eisenbasislegierungen oder Kobalt-Chrom-Wolfram-Legierungen) bestehen und durch Schweißen oder Schrauben an der Laufradschaufel befestigt werden. Dadurch können diese Einsätze auch in regelmäßigen Intervallen ausgetauscht werden ohne die Laufradschaufel und damit den Wirkungsgrad und die Leistung der hydraulischen Maschine, beispielsweise Turbine, zu beeinträchtigen.

Die Erfindung betrifft auch eine Antikavitationsleiste an einer Laufradschaufel einer hydraulischen Strömungsmaschine mit Nabe, an der Laufradschaufeln drehbar oder fest befestigt sind, wobei die Antikavitationsleiste am Aussendurchmesser der Laufradschaufel angeordnet ist. Sie ist dadurch gekennzeichnet, dass die Antikavitationsleiste mehrere Bereiche mit unterschiedlicher Höhe aufweist, wobei die Antikavitationsleiste nach einem Anlaufbereich im Anschluss an die sehr flache Eintrittskante der Antikavitationsleiste einen Bereich mit größerer Höhe von 120 - 250 %, vorzugsweise 130 - 220 %, der Höhe der übrigen Antikavitationsleiste und im anschließenden Bereich eine Höhe von 100 % aufweist. Durch die größere Höhe der Antikavitationsleiste am Beginn kann der kavitierende Wirbel von der Laufradschaufel und der Antikavitationsleiste weg in den freien Raum verlagert werden, wodurch die Kavitationsschäden stark verringert werden.

Eine vorteilhafte Weiterbildung der Erfindung ist dadurch gekennzeichnet, dass die Länge des Bereichs mit größerer Höhe 10 - 45 %, vorzugsweise 20 - 25 %, der Gesamtlänge der Antikavitationsleiste beträgt.

Eine günstige Ausgestaltung der Erfindung ist dadurch gekennzeichnet, dass die Antikavitationsleiste mit der Laufradschaufel integriert, angeschweißt oder angeschraubt ist.

Eine vorteilhafte Ausgestaltung der Erfindung ist dadurch gekennzeichnet, dass weitere Bereiche mit größerer Höhe von über 120 % über die Länge der Antikavitationsleiste vorgesehen sind, die voneinander durch Bereiche geringerer Höhe von 100 % getrennt sind. Damit können die Turbulenzströme entlang der Laufradschaufelkante wiederholt von der Kante weg in den freien Raum verlegt werden und damit Kavitationsschäden nahezu unterbunden werden.

Eine vorteilhafte Ausgestaltung der Erfindung ist dadurch gekennzeichnet, dass an den Bereich bzw. die Bereiche mit einer größeren Höhe anschließend eine Anzahl von Einsätzen aus kavitationsresistentem Material in der Antikavitationsleiste angeordnet ist. Durch diese Einsätze wird die Lebensdauer der Laufradschaufel und der Antikavitationsleiste stark verlängert.

Eine günstige Ausgestaltung der Erfindung ist dadurch gekennzeichnet, dass die Einsätze mit der Schaufel verschweißt sind, wobei sie auch mit der Schaufel verschraubt sein können. Dadurch können diese Einsätze auch in regelmäßigen Intervallen ausgetauscht werden ohne die Laufradschaufel und damit den Wirkungsgrad und die Leistung der Turbine zu beeinträchtigen. Derartige Einsätze können z.B. aus rostbeständigem Stahl, z.B. X 5 CrNi 13.4, oder besonders kavitationsresistenten Metallen (zum Beispiel kaltverfestigungsfähige rostfreie austenitische Eisenbasislegierungen oder Kobalt-Chrom-Wolfram-Legierungen) bestehen.

Die Erfindung wird nun anhand der Zeichnungen beispielhaft beschrieben, wobei
Fig. 1 eine Übersichtsdarstellung einer Kaplanturbine als Beispiel einer hydraulischen Strömungsmaschine
Fig. 2 einen Strömungskanal mit einer Laufradschaufel,
Fig. 3 eine Laufradschaufel mit Antikavitationsleiste nach dem Stand der Technik,
Fig. 4 eine Laufradschaufel mit einer erfindungsgemäßen Variante einer Antikavitationsleiste,
Fig. 5 mit einer alternativen erfindungsgemäßen Variante der Erfindung und
Fig. 6 eine Variante der Erfindung mit Einsätzen in der Antikavitationsleiste darstellt.

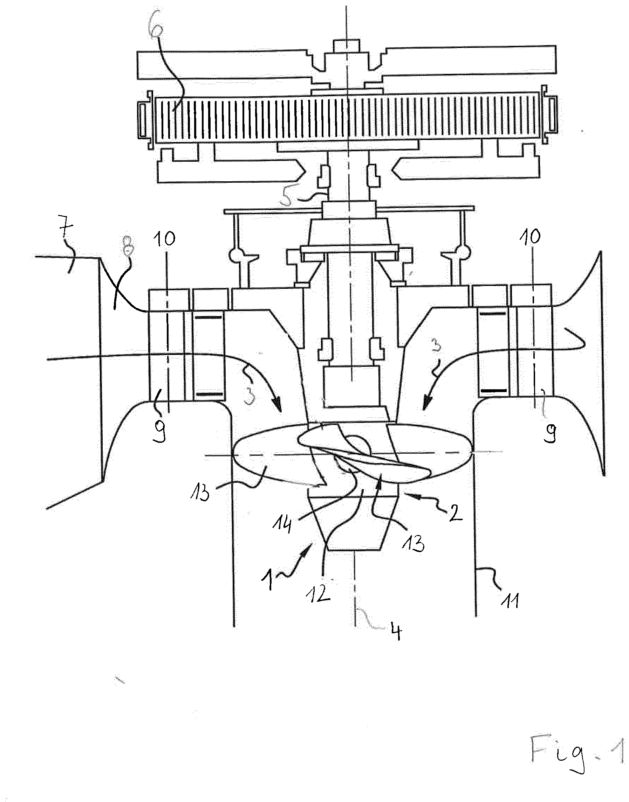

In Fig. 1 ist eine Übersicht über eine Turbinenanlage am Beispiel einer Kaplanturbine 1 als Beispiel einer hydraulischen Strömungsmaschine dargestellt. Die Kaplanturbine 1 weist ein Laufrad 2 auf, das unter der Kraft des hereinströmenden Wassers 3 um die Achse 4 rotiert. Das Laufrad ist an einer Welle 5 befestigt, die mit einem Generator 6 verbunden ist. Über ein Druckrohr 7 wird das Wasser einer Spirale 8 zugeführt, die den Wasserstrom 3 über ein Leitrad mit Leitschaufeln 9 dem Laufrad 2 der Turbine 1 zuführt. Die Leitschaufeln 9 können dabei jeweils um eine Achse 10 drehbar ausgeführt sein, um den Wasserstrom gut regeln zu können. Im Anschluss an das Laufrad 2 der Turbine 1 befindet sich ein Saugrohr 11 durch das das Wasser einem Fluss oder einem anderen Unterwasser zugeführt wird. Das Laufrad weist eine Nabe 12 und eine Anzahl Laufradschaufeln 13, hier sind vier Laufradschaufeln dargestellt, auf. Die Laufradschaufeln 13 sind mittels eines Flansches 14 drehbar an der Nabe 12 befestigt. So kann durch die Drehung der Laufradschaufeln 13 immer eine optimale Leistung der Turbine 1 erzielt werden.

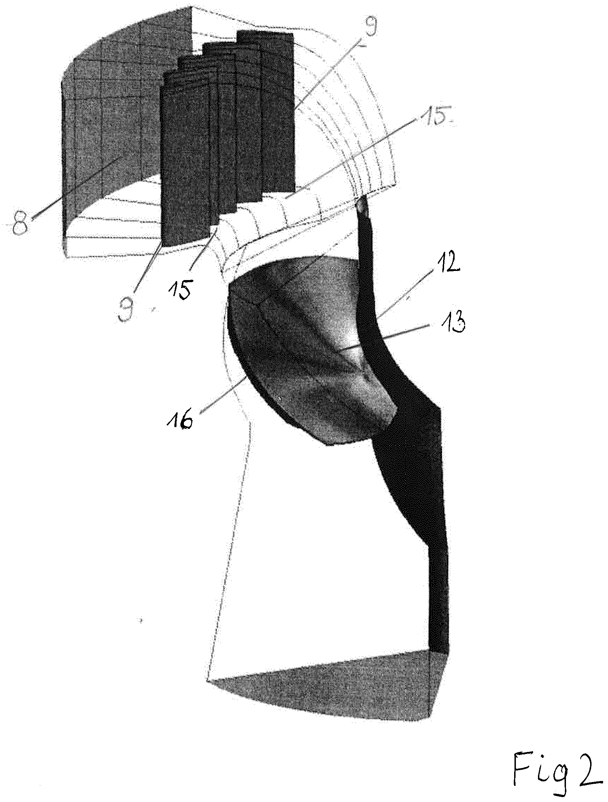

Fig. 2 zeigt den Strömungskanal für eine Laufradschaufel 13, die an der Nabe 12 befestigt ist. Ausgehend von der Spirale 8 strömt das Wasser durch die Kanäle 15 zwischen den Leitschaufeln 9. Die Laufradschaufeln sind als Profil mit veränderlicher Dickenverteilung ausgeführt. Durch die profilierten Laufradschaufeln wird das Wasser besonders gut geführt und die Energieumsetzung bewirkt. Am Aussendurchmesser der Laufradschaufel 13 ist eine Antikavitationsleiste 16 nach dem Stand der Technik zu sehen.

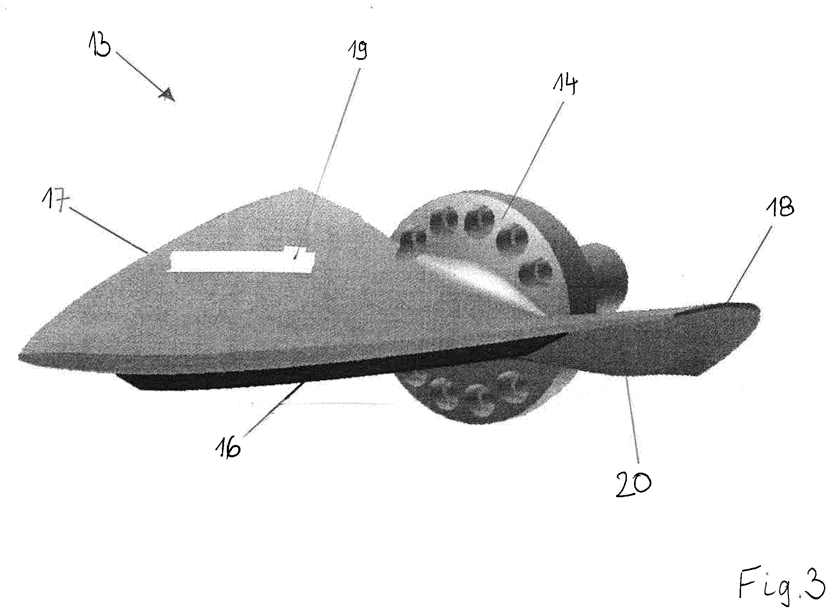

In Fig. 3 ist eine Laufradschaufel 13 mit einem Flansch 14 dargestellt. Es sind hier die Eintrittskante 17 der Laufradschaufel 13 und die Austrittskante 18 der Laufradschaufel 13 zu sehen, wie auch die Druckseite 19 und die Saugseite 20. Im Bereich des Aussendurchmessers der Laufradschaufel ist an der Saugseite 20 eine Antikavitationsleiste 16 nach dem Stand der Technik angebracht. Die Eintrittskante der Antikavitationsleiste 16 weist hier einen Winkel von ca. 30° auf. Der Kavitationsschaden ist hier, in der Mitte zwischen Eintrittskante 17 und Austrittskante 18 der Laufradschaufel 13 an der Antikavitationsleiste besonders ausgeprägt.

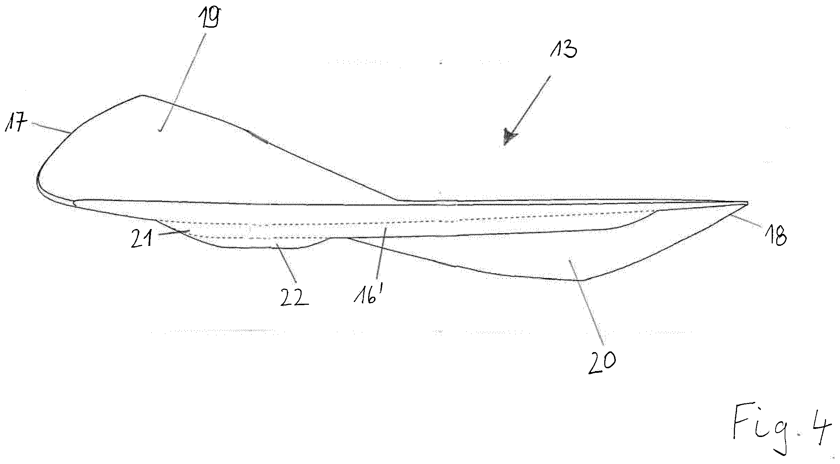

Fig. 4 zeigt eine Laufradschaufel 13 mit einer Antikavitationsleiste 16' gemäß der Erfindung. Die Laufradschaufel weist wieder eine Eintrittskante 17, eine Austrittskante 18 sowie eine Druckseite 19 und Saugseite 20 auf. Die Antikavitationsleiste 16' ist hier im Schnitt dargestellt. Man erkennt ausgehend von der Eintrittskante 17 der Laufradschaufel 13 eine sehr flache Eintrittskante 21 der Antikavitationsleiste 16' von ca. 10°- 60° (dargestellt ca. 20°) und daran anschließend einen Bereich mit größerer Höhe 22, der etwa 10 %- 45 % der Länge der Antikavitationsleiste 16' ausmacht. Dargestellt ist eine Länge von ca. 20 - 25% der Gesamtlänge der Antikavitationsleiste. In weiterer Folge geht die Höhe der Antikavitationsleiste 16' wieder auf die ursprüngliche Höhe (100 %) zurück. Die Höhe des den übrigen Teil der Antikavitationsleiste überragenden Bereichs 22 kann ca. 20 - 150 %, vorzugsweise 30 - 120 % (dargestellt ca. 75%), der Höhe der Antikavitationsleiste 16' betragen, d.h. die Gesamthöhe des überhöhten Teils 22 beträgt ca. 120 - 250 %, vorzugsweise 130 - 220 %, der Höhe der Antikavitationsleiste 16'. Die Antikavitationsleiste 16' kann dabei an die Laufradschaufel 13 angeformt, angeschweißt oder angeschraubt sein. Bei Herstellung der Laufradschaufel 13 wird der Teil der Antikavitationsleiste 16' mitgegossen und entsprechend heraus gefräst. Sobald größere Schäden durch Kavitation aufgetreten sind, wird die Antikavitationsleiste ersetzt und eine neue Antikavitationsleiste 16' an die Laufradschaufel 13 angeschweißt oder angeschraubt. Durch den Bereich mit größerer Höhe 22 wird der kavitierende Wirbel von der Laufradschaufel und der Antikavitationsleiste weg in den freien Raum verlagert, wodurch im kritischen Bereich der Kavitationsschaden an der Antikavitationsleiste 16' und der Laufradschaufel 13 stark reduziert werden kann.

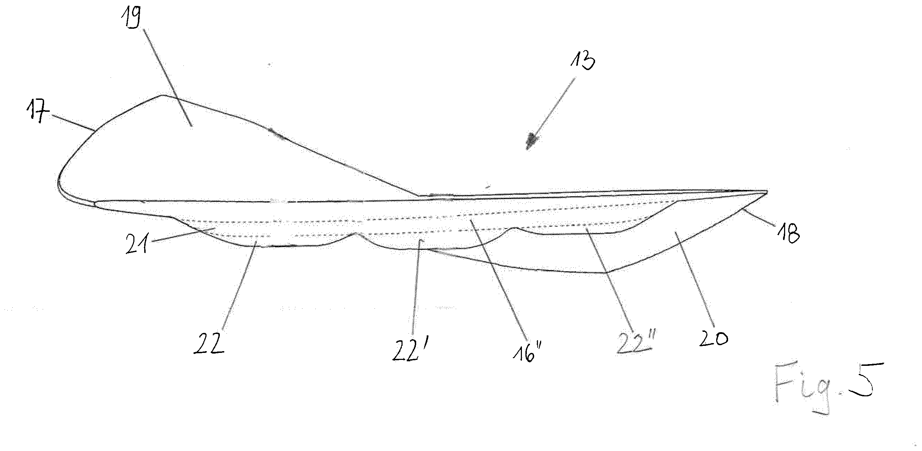

In Fig. 5 ist eine weitere Variante der Erfindung dargestellt. Die Antikavitationsleiste 16" weist, wie bei der Variante nach Fig. 4, eine Eintrittskante 21 auf, die einen Winkel von ca. 10 - 60° (dargestellt ca. 20°) hat. Nachfolgend sind mehrere Bereiche 22, 22' und 22" vorgesehen, die eine Überhöhung, d.h. größere Höhe als die Höhe der Antikavitationsleiste an sich, aufweisen, wobei die Überhöhung bei den einzelnen Bereichen 22, 22', 22" gleich oder unterschiedlich groß ist. So ist hier dargestellt, dass die Erhöhung des zweiten Bereichs 22' größer ist, als die des ersten Bereichs 22 und die des dritten Bereichs 21" geringer als die des ersten Bereichs 22. Damit kann den besonderen Bedingungen der Kavitation und der Schwere der Kavitationsschäden an den verschiedenen Stellen besonders gut Rechnung getragen werden.

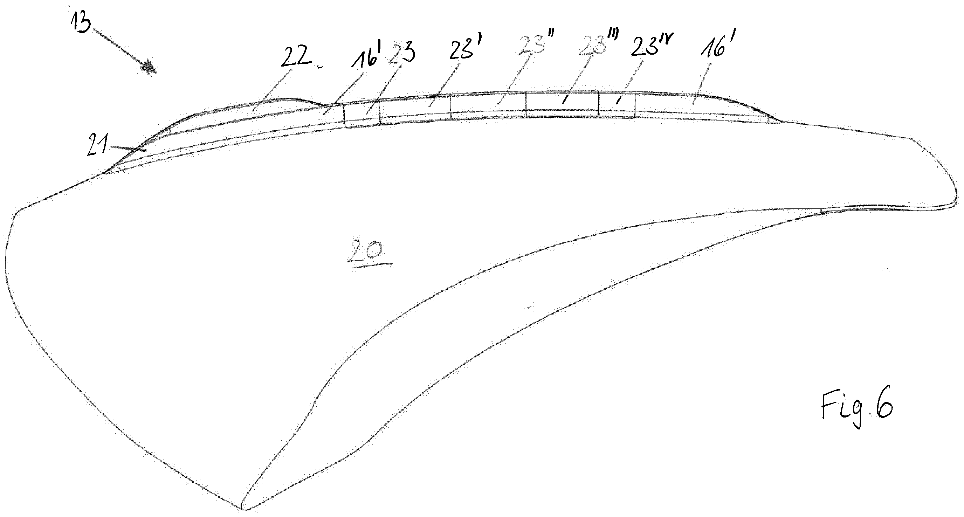

Fig. 6 zeigt eine Variante der Erfindung einer Antikavitationsleiste 16' mit einem Bereich größerer Höhe 22 am Beginn und mit Einsätzen 23, 23', 23", 23''', 23^{IV}, die anschließend an den Bereich größerer Höhe 22 angeordnet sind. Daran schließt sich ein weiterer Teil der Antikavitationsleiste 16' an. Die Einsätze 23, 23', 23", 23''', 23^{IV} sind daher ein integrierter Bestandteil der Antikavitationsleiste. Sie können angeschweißt, aber auch angeschraubt sein und können damit auch in regelmäßigen Intervallen ausgetauscht werden ohne die Laufradschaufel 13 und damit den Wirkungsgrad und die Leistung der hydraulischen Strömungsmaschine, beispielsweise Turbine zu beeinträchtigen. Die Einsätze 23, 23', 23", 23''', 23^{IV} können dabei je nach Lage und Beanspruchung durch die Kavitationskräfte aus gleichem kavitationsresistentem Material wie z.B. rostbeständigem Stahl, z.B. X 5 CrNi 13.4, oder besonders kavitationsresistenten Metallen (zum Beispiel kaltverfestigungsfähige rostfreie austenitische Eisenbasislegierungen oder Kobalt-Chrom-Wolfram-Legierungen) oder aber aus unterschiedlichen Materialien bestehen, um den unterschiedlichen Kavitationsbedingungen Rechnung zu tragen. Die Antikavitationsleiste 16' weist hier eine sehr flache Eintrittskante 21 von ca. 10°- 60° (dargestellt ca. 20°) und daran anschließend einen Bereich mit größerer Höhe 22 auf, der etwa 10 - 45 % der Länge der Antikavitationsleiste 16' ausmacht. Dargestellt ist eine Länge von ca. 20 - 25 % der Gesamtlänge der Leiste. In weiterer Folge geht die Höhe der Antikavitationsleiste 16' wieder auf die ursprüngliche Höhe (100 %) zurück. Die Höhe des den übrigen Teil der Antikavitationsleiste überragenden Teils kann ca. 20 - 150 %, vorzugsweise 30 - 120 %, (dargestellt ca. 75%) der Höhe der Antikavitationsleiste 16' betragen, d.h. die Gesamthöhe des Bereichs mit größerer Höhe 22 beträgt ca. 120 - 250 %, vorzugsweise 130 - 220 %, der Höhe der Antikavitationsleiste 16'. Fig. 6 zeigt eine Laufradschaufel 13 im Gegensatz zu den Fig. 4 und 5 von der Unterseite (Saugseite 20), um die Antikavitationsleiste 16' besser zeigen zu können. Die dem Betrachter zugewandte Seite ist daher der Teil der Laufradschaufel 13, der an der Nabenseite liegt.

## Patentansprüche

1. Laufradschaufel einer hydraulischen Strömungsmaschine, insbesondere Turbine, Pumpe oder Pumpturbine, bestehend aus einer Nabe (2) und Laufradschaufeln (13) ohne Aussenkranz, wobei die Laufradschaufeln (13) drehbar oder fest an der Nabe (2) befestigt sind und am Aussendurchmesser eine Antikavitationsleiste (16') aufweisen, **dadurch gekennzeichnet, dass** die Antikavitationsleiste (16') mehrere Bereiche mit unterschiedlicher Höhe aufweist, wobei die Antikavitationsleiste (16') nach einem Anlaufbereich im Anschluss an die sehr flache Eintrittskante (21) der Antikavitationsleiste (16') einen Bereich mit größerer Höhe (22) von 120 - 250 %, vorzugsweise 130 - 220 %, der Höhe der übrigen Antikavitationsleiste (16) und im anschließenden Bereich eine Höhe von 100 % aufweist, wobei die Laufradschaufel (13) als Profil mit veränderlicher Dickenverteilung ausgeführt sein kann.

2. Laufradschaufel nach Anspruch 1, **dadurch gekennzeichnet, dass** die Länge des Bereichs mit größerer Höhe (22) 10 - 45 %, vorzugsweise 20 - 25 %, der Gesamtlänge der Leiste (16') beträgt.

3. Laufradschaufel nach Anspruch 1 oder 2, **dadurch gekennzeichnet, dass** die Leiste (16') bis zu ihrem Ende eine konstante geringere Höhe von 100 % aufweist.

4. Laufradschaufel, nach einem der Ansprüche 1 bis 3, **dadurch gekennzeichnet, dass** weitere Bereiche mit größerer Höhe von über 120 % über die Länge der Antikavitationsleiste (16') vorgesehen sind, die voneinander durch Bereiche geringerer Höhe von 100 % getrennt sind.

5. Laufradschaufel nach Anspruch 1 bis 4, **dadurch gekennzeichnet, dass** die Antikavitationsleiste (16') mit der Laufradschaufel (13) integriert, angeschweißt oder angeschraubt ist.

6. Laufradschaufel nach einem der Ansprüche 1 bis 5, **dadurch gekennzeichnet, dass** an den ersten Bereich mit größerer Höhe (22) anschließend eine Anzahl von Einsätzen (23, 23', 23", 23"', 23^{IV}) aus kavitationsresistentem Material in der Antikavitationsleiste (16') angeordnet ist.

7. Laufradschaufel nach Anspruch 6, **dadurch gekennzeichnet, dass** die Einsätze (23, 23', 23", 23''', 23^{IV}) mit der Laufradschaufel (13) verschweißt sind.

8. Laufradschaufel nach Anspruch 6, **dadurch gekennzeichnet, dass** die Einsätze (23, 23', 23", 23''', 23^{IV}) mit der Laufradschaufel (13) verschraubt sind.

9. Antikavitationsleiste (16') an einer Laufradschaufel (13) einer Turbine mit Nabe (2), an der Laufradschaufeln (13) drehbar oder fest befestigt sind, wobei die Antikavitationsleiste (16') am Aussendurchmesser der Laufradschaufel (13) angeordnet ist, **dadurch gekennzeichnet, dass** die Antikavitationsleiste (16') mehrere Bereiche mit unterschiedlicher Höhe (22) aufweist, wobei die Antikavitationsleiste (16') nach einem Anlaufbereich im Anschluss an die sehr flache Eintrittskante (21) der Antikavitationsleiste (16') einen Bereich mit größerer Höhe (22) von 120 - 250 %, vorzugsweise 130 - 220 %, der Höhe der übrigen Antikavitationsleiste (16') und im anschließenden Bereich eine Höhe von 100 % aufweist.

10. Antikavitationsleiste nach Anspruch 9, **dadurch gekennzeichnet, dass** die Länge des Bereichs mit größerer Höhe (22) 10 - 45 %, vorzugsweise 20 - 25 %, der Gesamtlänge der Antikavitationsleiste (16') beträgt.

11. Antikavitationsleiste nach Anspruch 9 oder 10, **dadurch gekennzeichnet, dass** die Antikavitationsleiste (16') mit der Laufradschaufel (13) integriert, angeschweißt oder angeschraubt ist.

12. Antikavitationsleiste nach Anspruch 9 oder 10, **dadurch gekennzeichnet, dass** weitere Bereiche mit größerer Höhe (22) von über 120 % über die Länge der Antikavitationsleiste (16') vorgesehen sind, die voneinander durch Bereiche geringerer Höhe von 100 % getrennt sind .

13. Antikavitationsleiste nach einem der Ansprüche 9 bis 12, **dadurch gekennzeichnet, dass** an den Bereich größerer Höhe (22) bzw. die Bereiche (22', 22") mit einer größeren Höhe anschließend eine Anzahl von Einsätzen (23, 23', 23", 23''', 23^{IV}) aus kavitationsresistentem Material in der Antikavitationsleiste (16') angeordnet ist.

14. Antikavitationsleiste nach Anspruch 13, **dadurch gekennzeichnet, dass** die Einsätze (23, 23', 23", 23''', 23^{IV}) mit der Laufradschaufel (13) verschweißt oder verschraubt sind.

## Claims

1. Runner vane of a hydraulic fluid flow machine, especially a turbine, pump or pump-turbine, consisting of a hub (2) and runner vanes (13) without a ring gear, where the runner vanes (13) are secured rotatably or fixedly on the hub (2) and have an anti-cavitation strip (16') on the outer diameter, **characterized in that** the anti-cavitation strip (16') has several areas with different heights, where the anti-cavitation strip (16') has a higher area (22) measuring 120-250%, preferably 130-220%, of the height of the rest of the anti-cavitation strip (16) following a starting area that comes after the very flat leading edge (21) of the anti-cavitation strip (16'), and a height of 100% in the subsequent area, where the runner vane (13) can be designed as a profile with a variable thickness distribution.

2. Runner vane according to claim 1, **characterized in that** the length of the higher area (22) is 10-45%, preferably 20-25%, of the overall length of the strip (16').

3. Runner vane according to claim 1 or 2, **characterized in that** the strip (16') has a constant, lower height of 100% right to the end.

4. Runner vane according to one of claims 1 to 3, **characterized in that** further areas with a greater height of over 120%, separated from one another by areas with a lower height of 100%, are provided along the length of the anti-cavitation strip (16').

5. Runner vane according to claims 1 to 4, **characterized in that** the anti-cavitation strip (16') is integrated into, welded onto or bolted to the runner vane (13).

6. Runner vane according to one of claims 1 to 5, **characterized in that** a number of inserts (23, 23', 23", 23"', 23^{IV}) made of cavitation-resistant material are disposed in the anti-cavitation strip after the first higher area (22).

7. Runner vane according to Claim 6, **characterised in that** the inserts (23, 23', 23", 23''', 23^{IV}) are welded to the runner vane (13).

8. Runner vane according to Claim 6, **characterised by** the inserts (23, 23', 23", 23''', 23^{IV}) being bolted to the runner vane (13).

9. Anti-cavitation strip (16') on a runner vane (13) of a turbine with hub (2) to which runner vanes are secured rotatably or fixedly, where the anti-cavitation strip (16') is arranged on the outer diameter of the runner vane (13), **characterized in that** the anti-cavitation strip (16') has several areas with different heights (22), where the anti-cavitation strip (16') has a higher area (22) measuring 120-250%, preferably 130-220%, of the height of the rest of the anti-cavitation strip (16') following a starting area that comes after the very flat leading edge (21) of the anti-cavitation strip (16'), and a height of 100% in the subsequent area.

10. Anti-cavitation strip according to claim 9, **characterized in that** the length of the higher area (22) is 10-45%, preferably 20-25%, of the overall length of the anti-cavitation strip (16').

11. Anti-cavitation strip according to claim 9 or 10, **characterized in that** the anti-cavitation strip (16') is integrated into, welded onto or bolted to the runner vane (13).

12. Anti-cavitation strip according to claim 9 or 10, **characterized in that** further areas with a greater height (22) of over 120%, separated from one another by areas with a lower height of 100%, are provided along the length of the anti-cavitation strip (16').

13. Anti-cavitation strip according to one of claims 9 to 12, **characterized in that** a number of inserts (23, 23', 23", 23"', 23^{IV}) made of cavitation-resistant material are disposed in the anti-cavitation strip (16') after the higher area (22) or areas (22', 22"), respectively.

14. Anti-cavitation strip according to Claim 13, **characterized in that** the inserts (23, 23', 23", 23''', 23^{IV}) are welded or bolted to the runner vane (13).

## Revendications

1. Pale de roue d'une turbomachine hydraulique, en particulier d'une turbine, d'une pompe ou d'une turbine de pompe, constituée d'un moyeu (2) et de pales de roue (13) sans couronne externe, les pales de roue (13) étant fixées en rotation ou à demeure au moyeu (2) et comportant sur le diamètre extérieur une barre anticavitation (16'), **caractérisée en ce que** la barre anticavitation (16') comporte plusieurs zones de différentes hauteurs, la barre anticavitation (16') comportant après une zone d'appui dans le prolongement du bord d'entrée très plat (21) de la barre anticavitation (16') une zone ayant une hauteur supérieure (22) entre 120 - 250 %, de préférence entre 130 - 220 % de la hauteur de la barre anticavitation (16) restante et dans la zone adjacente une hauteur de 100 %, la pale de roue (13) pouvant être conçue en tant que profilé ayant une répartition d'épaisseur variable.

2. Pale de roue selon la revendication 1, **caractérisé en ce que** la longueur de la zone ayant une hauteur supérieure (22) s'élève entre 10 et 45 %, de préférence entre 20 et 25 %, de la longueur totale de la barre (16').

3. Pale de roue selon la revendication 1 ou 2, **caractérisé en ce que** la barre (16') comporte jusqu'à son extrémité une hauteur réduite constante de 100 %.

4. Pale de roue selon l'une des revendications 1 à 3, **caractérisée en ce que** des zones supplémentaire ayant une hauteur supérieure de plus de 120 % sont disposées sur la longueur de la barre anticavitation (16') qui sont séparées les unes des autres par des zones de hauteur réduite de 100 %.

5. Pale de roue selon la revendication 1 à 4, **caractérisé en ce que** la barre anticavitation (16') est intégrée, soudée ou vissée à la pale de roue (13).

6. Pale de roue selon l'une quelconque des revendications 1 à 5, **caractérisée en ce que** dans le prolongement de la première zone ayant une hauteur supérieure (22), un nombre d'inserts (23, 23', 23", 23''', 23^{IV}) en matériau résistant à la cavitation est disposé dans la barre anticavitation (16').

7. Pale de roue selon la revendication 6, **caractérisée en ce que** les inserts (23, 23', 23", 23''', 23^{IV}) sont soudées à la pale de roue (13).

8. Pale de roue selon la revendication 6, **caractérisée en ce que** les inserts (23, 23', 23", 23''', 23^{IV}) sont vissés à la pale de roue (13).

9. Barre anticavitation (16') sur une pale de roue (13) d'une turbine comprenant un moyeu (2), sur lequel les pales de roue (13) sont fixées en rotation ou à demeure, la barre anticavitation (16') étant disposée sur le diamètre extérieur de la pale de roue (13), **caractérisée en ce que** la barre anticavitation (16') comporte plusieurs zones de différentes hauteurs (22), la barre anticavitation (16') comportant après une zone d'appui dans le prolongement du bord d'entrée très plat (21) de la barre anticavitation (16') une zone ayant une hauteur supérieure (22) entre 120 - 250 %, de préférence entre 130 - 220 %, de la hauteur de la barre anticavitation (16') restante et dans une zone adjacente une hauteur de 100 %.

10. Barre anticavitation selon la revendication 9, **caractérisée en ce que** la longueur de la zone ayant une hauteur supérieure (22) s'élève entre 10 et 45 %, de préférence entre 20 et 25 % de la longueur totale de la barre anticavitation (16').

11. Barre anticavitation selon la revendication 9 ou 10, **caractérisée en ce que** la barre anticavitation (16') est intégrée, soudée ou vissée à la pale directrice (13).

12. Barre anticavitation selon la revendication 9 ou 10, **caractérisée en ce qu'**il est prévu des zones supplémentaire ayant une hauteur supérieure (200) de plus de 120 % sur la longueur de la barre anticavitation (16') qui sont séparées les unes des autres par des zones de hauteur réduite de 100%.

13. Barre anticavitation selon l'une quelconque des revendications 9 à 12, **caractérisée en ce que**, adjacent à la zone (22) de hauteur supérieure ou aux zones (22', 22") ayant une hauteur supérieure, un nombre d'inserts (23, 23', 23", 23''', 23^{IV}) en matériau résistant à la cavitation est disposé dans la barre anticavitation (16').

14. Barre anticavitation selon la revendication 13, **caractérisée en ce que** les inserts (23, 23', 23", 23''', 23^{IV}) sont vissés ou soudés à la pale de roue (13).
